# EUROPÄISCHE PATENTSCHRIFT

(11) **EP 2 101 384 B1**
(45) Veröffentlichungstag und Bekanntmachung des Hinweises auf die Patenterteilung: **12.05.2010**
(21) Anmeldenummer: 08004515.6
(22) Anmeldetag: 12.03.2008
(51) Int. Cl.: H02G 3/22

(54) **Leitungsdurchführungssystem durch eine Wandöffnung**
System of leading a cable duct through an opening in a wall
Système de passage de lignes à travers une ouverture de mur

(43) Veröffentlichungstag der Anmeldung: 16.09.2009
(73) Patentinhaber: Hauff-Technik GmbH & Co. KG, 89542 Herbrechtingen (DE)
(72) Erfinder: Kurz, Ralf, 89537 Giengen (DE); Egritepe, Senol, 89520 Heidenheim (DE)
(74) Vertreter: Szynka, Dirk

(56) Entgegenhaltungen:
- EP-A- 1 705 769
- WO-A-99/56368
- WO-A-2005/057749
- DE-A1-102005 002 879
- DE-B3-102005 011 286

## Beschreibung

Diese Erfindung betrifft ein System zur Leitungsdurchführung durch eine Öffnung in einer Wand.

Leitungsdurchführungen dienen der Befestigung und Abdichtung von Leitungen, die durch eine Öffnung in einer Wand geführt sind. Vorliegend geht es vorwiegend um größere Öffnungen, die eine ganze Zahl von Leitungen aufnehmen können. Konventionell werden in einem Rahmen innerhalb der Wandöffnung je zwei Halbschalen aus einem Elastomer um eine jeweilige Leitung gelegt, die gemeinsam die Leitung vollständig umschließen. Die Wandöffnung wird von einer Seite beginnend mit weiteren Elastomerkörpern, die gegebenenfalls paarweise weitere Leitungen umschließen, teilweise aufgefüllt. In den verbleibenden Teil wird eine Spannvorrichtung, eventuell gemeinsam mit weiteren Füllstücken zum vollständigen Ausfüllen der Wandöffnung, eingesetzt, um die Elastomerkörper und Leitungen in der Wandöffnung mechanisch zu befestigen und abzudichten, indem die bis dahin lose aufeinander gelegten Elastomerkörper senkrecht zur Durchführungsrichtung verpresst werden.

Eine solche Leitungsdurchführung zeigt die EP 1 705 769 A1 und stellt somit den nächstliegenden Stand der Technik dar. Dort wirkt die Spannvorrichtung senkrecht zur Durchführungsrichtung

Die DE 10 2005 011 286 B3 zeigt eine Leitungsdurchführung, bei der eine Öffnung mit einem Rahmen in Teilöffnungen unterteilt und jede der Teilöffnungen voneinander unabhängig mit jeweils einer einzigen, die Teilöffnung ausfüllenden Quetschdichtung gedichtet wird.

Dieser Erfindung liegt das Problem zugrunde, die Anwendungssicherheit von Leitungsdurchführungen zu verbessern und deren Montage effizienter zu gestalten.

Die Erfindung löst das Problem mit einem Leitungsdurchführungssystem zum Aufbauen eines dichtenden Verschlusses einer Öffnung in einer Wand mit einem Rahmen zur dichten Befestigung in der Wandöffnung und mit einer zusammenhängenden Durchlassöffnung für eine Leitung in dem Rahmen, einer Spannvorrichtung und einer Mehrzahl Module, die jeweils aufweisen: eine solche Querschnittsfläche senkrecht zur Durchführungsrichtung im Verhältnis zu der Querschnittsfläche der Durchlassöffnung des Rahmens, dass sie gemeinsam zum Dichten in die Durchlassöffnung eingesetzt werden können, einen Elastomerkörper zum Aufnehmen der Leitung und eine Elastomerkörperdichtfläche, die in gespanntem Zustand der Spannvorrichtung auf dem Umfang des Moduls senkrecht zur Durchführungsrichtung außen liegt, dadurch gekennzeichnet, dass die Module jeweils eine Spannvorrichtung zum individuellen Spannen in Durchführungsrichtung aufweisen.

Ferner richtet sich die Erfindung auf ein Verfahren zum Aufbauen eines dichtenden Verschlusses einer zusammenhängenden Öffnung für eine Leitung in einer Wand, bei dem eine Mehrzahl Module jeweils die Leitung in einem Elastomerkörper aufnehmen können, gemeinsam in die Wand eingesetzt werden, mit einer Spannvorrichtung gespannt werden, dann gegebenenfalls die Leitung dichten und ferner mit einer Elastomerkörperdichtfläche dichten, die in gespanntem Zustand der Spannvorrichtung auf dem Umfang des Moduls senkrecht zur Durchführungsrichtung außen liegt, dadurch gekennzeichnet, dass jedes Modul mit einer eigenen Spannvorrichtung individuell gespannt wird.

Weiterhin richtet sich die Erfindung auf die entsprechende Verwendung eines Leitungsdurchführungssystems zum Abdichten einer Leitung durch eine Öffnung in einer Wand.

Bevorzugte Ausgestaltungen der verschiedenen Aspekte der Erfindung sind in den abhängigen Ansprüchen angegeben und ergeben sich des Weiteren aus der folgenden Beschreibung. Dabei wird nicht im Einzelnen zwischen Verfahrens-, Verwendungs- und Vorrichtungsmerkmalen der Erfindung unterschieden, sodass die folgende Offenbarung im Einblick auf alle diese Kategorien zu verstehen ist.

Die der Erfindung zugrunde liegende Idee beruht auf Feststellungen der Erfinder, dass die Verpressung innerhalb der aufgeschichteten Elastomerkörper bei einer Leitungsdurchführung nach dem Stand der Technik mit zunehmendem Abstand zu der Spannvorrichtung abnimmt, mit dem Risiko, dass sich eine unzureichende Dichtwirkung der entfernt liegenden Elastomerkörper einstellt. Dagegen führt eine stärkere Verpressung zu größeren mechanischen Belastungen der nahe zur Spannvorrichtung gelegenen Elastomerkörper und der darin eingeschlossenen Leitungen mit dem Risiko, diese zu beschädigen.

Ferner hat es sich bei der Montage eines solchen Systems nach dem Stand der Technik als nachteilig herausgestellt, dass zuerst alle Leitungen innerhalb der Wandöffnung mit Elastomerkörpern umschlossen werden müssen und die Elastomerkörper dabei so aneinander zu reihen sind, dass sie die Wandöffnung gemeinsam mit der Spannvorrichtung vollständig ausfüllen und erst in einem abschließenden Schritt der Montage, nämlich dem Spannen der Spannvorrichtung, innerhalb der Wandöffnung befestigt werden. Dadurch können sie sich während der Montage leicht von ihrer vorgesehenen Position entfernen und insbesondere bei vertikalen Leitungsdurchführungen aus der Wandöffnung herausfallen.

Nach der Idee der Erfinder wird durch eine "dezentrale" Verspannung der leitungsumschließenden Elastomerkörper bei der Leitungsdurchführung eine bessere Einstellbarkeit und möglichst homogene Druckverteilung für eine gleichmäßige Dichtwirkung, sowie eine bei Bedarf abschnittsweise und damit schrittweise Befestigung innerhalb der Wandöffnung zur Erleichterung der Montage bewirkt.

Demnach soll eine Leitungsdurchführung durch eine Wandöffnung einerseits der Befestigung der Leitung dienen, andererseits eine Funktion der Wand übernehmen, die nachfolgend als "dichten" bezeichnet wird und in der Separation zweier auf entgegengesetzten Seiten der Wand angrenzender Bereiche liegt. Eine Wand im Sinne der Erfindung ist also eine dichte Begrenzung eines Bereichs. Dabei sind Innen- oder Außenwände beispielsweise von Luft-, Wasser-, Raum- oder Landfahrzeugen, von Maschinen oder technischen Anlagen bevorzugt, wobei die Abdichtung Flüssigkeiten und/oder Gase betreffen kann.

Die Leitung ist vorzugsweise eine Strom-, Gas-, Wasser-, Wärme-, Telekommunikatiöns- oder anderweitige Signal- oder Datenleitung. Die Leitung kann starr oder flexibel sein.

Das erfindungsgemäße Leitungsdurchführungssystem ist für eine Öffnung in einer Wand mit einem Rahmen vorgesehen, der vorzugsweise teilweise oder ganz in die Wandöffnung eingelassen ist, aber auch vor dieser auf der Wand aufgesetzt sein kann. Im Sinne der Erfindung ist also eine Montage des Leitungsdurchführungssystems in einer hier so genannten "Durchlassöffnung" des Rahmens der "Wandöffnung" vorgesehen. Im Folgenden wird mit dem Begriff "Durchlassöffnung" also die Öffnung zur Aufnahme des Leitungsdurchführungssystems des Rahmens bezeichnet, der seinerseits in einer "Wandöffnung" angebracht ist.

Dies betrifft jedenfalls die Vorrichtungskategorie. Im Rahmen der Verfahrenskategorie und der Verwendung der Vorrichtung ist der Rahmen nicht zwingend nötig, kann also das erfindungsgemäße Leitungsdurchführungssystem auch direkt in der Wandöffnung eingesetzt werden. Letztlich kommt es nämlich darauf an, dass sich die Erfindung auf solche Leitungsdurchführungssysteme bezieht, in denen eine Durchführungsöffnung (oder, wenn kein Rahmen vorhanden ist, Wandöffnung) durch eine Mehrzahl Module verschlossen wird.

Dabei wird auf eine zusammenhängende Öffnung abgestellt, also nicht eine Summe aus einer Mehrzahl voneinander getrennter Öffnungen. Solche getrennten Öffnungen kommen im Stand der Technik insbesondere dann vor, wenn Rahmen durch feste Gitterunterteilungen so aufgeteilt sind, dass sie eine Mehrzahl (jeweils zusammenhängende) Durchlassöffnungen aufweisen, in die dann im Stand der Technik jeweils eine Leitungsdurchführung eingesetzt wird. Die der Erfindung zugrunde liegende Problematik der Optimierung der Einstellbarkeit des Drucks oder der Spannung und der gleichmäßigen Verteilung von Druck oder Spannung stellt sich aber dann nicht, wenn ein starres Gitter die einzelnen Module oder Leitungsdurchführungen ohnehin voneinander entkoppelt. Im Vorrichtungsfall ergibt sich dies durch die Struktur des mit beanspruchten Rahmens und der darin enthaltenen zusammenhängenden Öffnung, in die mehr als ein einziges Modul hineinpasst. Im Verfahrens- und Verwendungsfall ergibt es sich allgemeiner durch das Nebeneinandersetzen einer Mehrzahl Module. Daher beziehen sich die Verfahrens- und Verwendungskategorie auch auf eine Abdichtung einer Wandöffnung ohne Rahmen.

Die Erfindung richtet sich also bevorzugt auf solche Anwendungsfälle, bei denen die Module tatsächlich direkt aneinander angrenzend, jedenfalls nicht durch Rahmengitterwände oder andere starre Teile voneinander getrennt, eingesetzt werden.

Der Rahmen kann im Übrigen ein- wie mehrteilig, geschlossen oder öffenbar und gegebenenfalls mit einer zusätzlichen Dichtung mit der Wand entweder fest oder mit einer Befestigungsvorrichtung lösbar verbunden sein, beispielsweise geschraubt, geschweißt oder verklebt. Ferner ist denkbar, dass der Rahmen durch die Verspannung des aufgenommenen Systems zusätzlichen Halt in der Wandöffnung erfährt oder auch nur dadurch durch Kraft- oder Formschluss befestigt wird. Insbesondere kommen feste geschlossene einteilige Metallrahmen in Betracht. Es kommen grundsätzlich sogar Rahmen mit Gittern zur Unterteilung in Betracht, so lange die dadurch entstehenden einzelnen Öffnungen jeweils wieder mit einer Mehrzahl Module verschlossen werden.

Die Erfindung sieht vor, die Durchlassöffnung mit einer Mehrzahl Module zu verschließen, indem die Module in einer Ebene senkrecht zur Durchführungsrichtung innerhalb der Öffnung angeordnet werden. Dazu müssen die Module in die Öffnung passen, d. h. die Querschnittsfläche der zum Verschließen angeordneten Module muss eine Teilfläche der Querschnittsfläche der Durchlassöffnung sein, sodass diese Module gemeinsam zum Dichten in die Durchlassöffnung eingesetzt werden können. Hierzu weisen die Module vorzugsweise eine für eine flächenfüllende Anordnung geeignete Umrissform auf, beispielsweise die Form eines Rechtecks oder eines gleichmäßigen Sechsecks.

Innerhalb der Durchlassöffnung dichten die Module mit der Elastomerkörperdichtfläche, die zumindest in gespanntem Zustand der Spannvorrichtung auf dem Umfang der Module senkrecht zur Durchführungsrichtung außen liegt. Dabei soll diese bevorzugt mindestens 50 % des Umfangs einnehmen, so dass ein Modul eine Dichtfläche zu benachbarten Modulen in mindestens zwei Richtungen aufweist und an den verbleibenden Seiten von entsprechenden Dichtflächen weiterer benachbarter Module gedichtet werden kann. Insbesondere wenn die Elastomerkörperdichtfläche nur bezüglich eines Teils des Umfangs dichtet, kann für eine vollständige Abdichtung der Öffnung ein weiteres dichtendes Element verwendet werden, beispielsweise eine Dichtschnur oder eine elastische Oberfläche der Laibung der Durchlassöffnung.

Die Befestigung der Module innerhalb der Durchlassöffnung erfolgt mit deren Spannvorrichtungen, indem die Elastomerkörper in Durchführungsrichtung verpresst werden und sich in Richtungen senkrecht dazu ausdehnen, sodass die außen liegenden Elastomerkörperdichtflächen nach außen gedrückt werden. Durch diese Ausdehnung können die Module gegen die Laibung der Durchlassöffnung verspannt und somit befestigt werden und dichten dabei gegeneinander, sowie eine in einem Elastomerkörper aufgenommene Leitung.

Die Ausdehnung der Module senkrecht zur Durchführungsrichtung beim Spannen der Spannvorrichtung ermöglicht, eine einzelne Reihe von Modulen innerhalb der Durchlassöffnung zu befestigen, sobald die Reihe von einer Wand zu einer gegenüberliegenden Wand der Öffnung reicht. Insbesondere erlaubt die Erfindung damit die Befestigung eines Teils der Module, schon bevor die Gesamtheit der für die Leitungsdurchführung benötigten Module in die Durchlassöffnung eingebracht ist.

Weiterhin ist denkbar, wenngleich nicht bevorzugt, dass die erfindungsgemäßen Module gemeinsam mit weiteren Modulen ohne Spannvorrichtung eingesetzt werden, wobei in diesem Fall mindestens ein erfindungsgemäßes Modul in jeder Reihe enthalten sein sollte, um diese in der Durchlassöffnung zu befestigen. Die Gesamtquerschnittsfläche der erfindungsgemäßen Module in einer Leitungsdurchführung kann also geringer als die Querschnittsfläche der Öffnung sein, wobei in dieser Reihenfolge zunehmend bevorzugt mindestens 2, 3 oder 4 erfindungsgemäße Module pro Öffnung eingesetzt werden. Für eine homogene Druckverteilung sind in dieser Reihenfolge zunehmend bevorzugt mehr als 20 %, 25 % oder 50 % der für die Leitungsdurchführung verwendeten Module erfindungsgemäße Module mit Spannvorrichtung. Im Sinne der Erfindung können Zwischenräume, die nicht durch die Ausdehnung der Module beim Verpressen überbrückbar sind, mit Füllstücken, vorzugsweise aus Elastomeren, belegt werden.

Wie oben bereits geschildert, wird der Elastomerkörper mit der Spannvorrichtung in Durchführungsrichtung verpresst, um durch eine Ausdehnung in Richtungen senkrecht dazu zu dichten und die Module in der Durchlassöffnung zu befestigen. Bevorzugt weist die Spannvorrichtung dazu Auflageflächen auf den beidseitigen Stirnseiten des Elastomerkörpers in Durchführungsrichtung auf, die die Spannkraft in Durchführungsrichtung übertragen. Vorzugsweise umranden diese Auflageflächen die Stirnseiten für eine gleichmäßige Kraftübertragung vollständig.

In einer bevorzugten Ausführung wird die Spannvorrichtung im verschlossenen Zustand durch das Umschließen des Elastomerkörpers an diesem befestigt und kann ihn dabei zusammenhalten, wenn er geschlitzt oder mehrteilig ist. Die Spannvorrichfung umfasst hierzu den Elastomerkörper quasi wie ein Band an seinem Umfang senkrecht zur Durchführungsrichtung, bedeckt diese Umfangsfläche jedoch nicht vollständig, um die Ausdehnung des Elastomerkörpers senkrecht zur Durchführungsrichtung zu gewährleisten.

Die Spannvorrichtung kann zum Umschließen einen ersten Schenkel auf der Umfangsfläche und zum Verpressen je einen zweiten Schenkel auf den Stirnseiten des Elastomerkörpers aufweisen. Damit weisen Elastomerkörper und Spannvorrichtung ein Profil auf, das durch Formschluss der beiden ein Herausziehen des Elastomerkörpers bei geschlossener Spannvorrichtung in Durchführungsrichtung aus dem Modul verhindert, etwa bei Zug auf der Leitung.

Die Spannvorrichtung weist bevorzugt einen Verschluss zum Einlegen oder Entnehmen der Leitung auf, sodass die Spannvorrichtung von dem Modul abgenommen werden kann, beispielsweise um diese zu prüfen, zu reparieren oder zu ersetzen, ohne dass hierzu der Elastomerkörper von der Leitung entfernt werden oder sogar die Leitung aus der Wandöffnung herausgenommen werden müsste, und ferner bei geschlitzten oder infolge Mehrteiligkeit abnehmbaren Elastomerkörpern das Modul zudem zum Dichten einer bereits in der Durchlassöffnung verlegten Leitung nutzbar ist.

Eine bevorzugte Ausführung des Verschlusses weist einen Spannbolzen, bevorzugt eine Schraube, auf, der das Öffnen der Spannvorrichtung ermöglicht und diese zum Spannen wieder verschließen kann. Beim Öffnen der Spannvorrichtung wird bevorzugt ein weiterer Spannbolzen zum Spannen in Durchführungsrichtung, vorzugsweise eine Schraube, als Gelenkachse zum Aufklappen der Spannvorrichtung senkrecht zur Durchführungsrichtung für das Einlegen oder Entnehmen einer Leitung verwendet. Als Material der Spannvorrichtung wird für die Übertragung der Spannkräfte ein Metall oder ein glasfaserverstärkter Kunststoff bevorzugt.

Bei einer bevorzugten Ausführung des Moduls ist der Elastomerkörper mehrteilig, besteht also aus physisch getrennten Teilen, wobei ein Teil der Aufnahme der Leitung dient und ein weiterer Teil eine außen liegende Dichtfläche zur Abdichtung gegen benachbarte Module oder die Durchlassöffnung aufweist. Insbesondere Letzterer kann ersteren rahmenartig umfassen. Insbesondere Ersterer kann seinerseits mehrteilig sein.

Vorzugsweise ist der Elastomerkörper bzw. Elastomerkörperteil zur Aufnahme der Leitung in Durchführungsrichtung so eingeschlitzt, dass die Leitung durch den Schlitz in den Elastomerkörper eingelegt werden kann und dort von diesem umschlossen ist. Dabei ist der Elastomerkörper durch den Schlitz nur so weit aufgetrennt, dass er beim Öffnen für das Einlegen der Leitung zusammenhängend bleibt. Damit weist er einen deutlichen Vorteil gegenüber einem System nach dem Stand der Technik auf, bei dem die Leitung von zwei getrennten Elastomerkörpern jeweils zur Hälfte umschlossen ist, die sich deshalb bei der Montage leicht von der Leitung lösen. Dennoch kann erfindungsgemäß der Elastomerkörper auch um die Leitung gelegt werden, wenn diese bereits durch die Durchlassöffnung verlegt ist.

Der Elastomerkörper bzw. Elastomerkörperteil zur Aufnahme der Leitung kann eine oder auch eine Mehrzahl von Leitungen direkt in dem Schlitz aufnehmen, wenn diese dünn genug sind, um von dem elastischen Material dicht umschlossen zu werden.

Vorzugsweise weist aber der Elastomerkörper bzw. Elastomerkörperteil zur Aufnahme der Leitung ein oder eine Mehrzahl konzentrisch angeordnete Füllelemente von vorzugsweise zylindrischer bzw. hohlzylindrischer Form auf, die mit dem Elastomer körper verbunden, beispielsweise durch eine Sollbruchstelle oder durch Abreißstege, oder auch lose in diesen eingelegt sein können. Sie können aus dem Elastomerkörper einzeln entnommen werden, um einen der Form der Leitung angepassten Freiaum des Elastomerkörpers freizugeben. Dazu sind sie bevorzugt von dem Schlitz des Elastomerkörpers (gegebenenfalls mindestens bis zu einem in der konzentrischen Anordnung innen liegenden zylindrischen Element) durchtrennt, sodass sie genauso wie der Elastomerkörper aufklappbar sind. Durch gezielte Entnahme der konzentrisch angeordneten Elemente kann also eine Durchgangsöffnung durch den Elastomerkörper in Durchführungsrichtung erzeugt werden und/oder in ihrem Querschnitt an die Leitung angepasst werden.

Wenn solche Füllelemente den Elastomerkörper vollständig schließen, kann man nicht im eigentlichen Sinn von einer Öffnung des Elastomerkörpers sprechen (weil die Füllelemente ja als Teile des Elastomerkörpers verstanden werden). Eine Öffnung würde sich dann erst nach Entnahme zumindest eines Füllelements bilden. Bei letztlich hohlen Füllelementen, die also eine Öffnung des Elastomerkörpers begrenzen, ist dies anders. Im Übrigen sind auch Elastomerkörper bevorzugt, die an sich Öffnungen, also auch ohne Füllelemente aufweisen, natürlich wieder in Durchführungsrichtung zur Aufnahme einer Leitung. Eine solche Öffnung ist vorzugsweise durch einen Schlitz des Elastomerkörpers zugänglich.

Das System weist bevorzugt bei zumindest einem Modul eine in Durchführungsrichtung sichtbare Farbmarkierung auf, die dieses Modul kennzeichnet. Dabei ist denkbar, dass die Farbmarkierung beispielsweise eine Information über den Durchmesser oder die Art der Leitung, für deren Aufnahme das Modul geeignet ist, wiedergibt.

Zur Verteilung der Anpresskraft der Spannvorrichtung weisen die Module vorzugsweise beidseitig des Elastomerkörpers bzw. der Elastomerkörperteile Pressplatten aus einem festen Material, beispielsweise Metall oder glasfaserverstärkter Kunststoff, auf. Dadurch wird sichergestellt, dass der zum Dichten notwendige Anpressdruck der Spannvorrichtung auf einen größeren Teil der Stirnfläche des Elastomerkörpers über tragen wird. In einer möglichen Ausführung ist jeweils beidseitig in Durchführungsrichtung eine Pressplatte fest mit dem Elastomerkörper verbunden. Bei der Verwendung der Pressplatten übt die Spannvorrichtung eine Kraft in Durchführungsrichtung direkt auf diese Platten aus, wobei die Platten, gegebenenfalls mit den befestigten Elastomerkörpern, durch Formschluss mit der Spannvorrichtung im Modul gehalten werden können.

Weitere Ausführungen liegen darin, dass einerseits ein Elastomerkörper bzw. Elastomerkörperteil für die Aufnahme einer Mehrzahl Leitungen ausgelegt ist, also gegebenenfalls eine Mehrzahl nicht konzentrisch angeordnete Füllelemente bzw. Öffnungen aufweist, andererseits ein Modul auch eine Mehrzahl von Elastomerkörpern bzw. Elastomerkörperteilen zur Aufnahme einer oder einer Mehrzahl von Leitungen aufweisen kann.

Ferner sind der Elastomerkörper bzw. die Elastomerkörperteile zur Aufnahme einer oder einer Mehrzahl von Leitungen vorzugsweise bei geöffneter Spannvorrichtung aus dem Modul entnehmbar und gegen andere austauschbar, sodass ein Modul sowohl bezüglich der Anzahl, als auch bezüglich der Art und des Durchmessers der aufzunehmenden Leitungen anpassbar ist.

Bei einer günstigen Ausgestaltung zeichnet sich ein erfindungsgemäßes Leitungsdurchführungssystem insbesondere dadurch aus, dass das erfindungsgemäße Modul außerhalb der Durchlassöffnung eine Leitung aufnehmen kann und an dieser durch Schließen des Verschlusses der Spannvorrichtung fixiert wird. Besonders bei Durchführungen mit einer Mehrzahl von Leitungen ist es von Vorteil, dass so die dichtenden Elastomerkörper relativ zu den Leitungen individuell vorfixiert werden können. Zusätzlich zu der oben dargestellten dezentralen Verspannung der Module innerhalb der Durchlassöffnung ermöglicht die Erfindung also weitere Vorteile gegenüber dem Stand der Technik, beispielsweise wird das Herausfallen der Elastomerkörper aus der Durchlassöffnung während der Montage verhindert, bei der Abdichtung kann eine gleichmäßige Druckverteilung auf die Dichtflächen erzielt werden und es können sogar einzelne Module aus einem fertig aufgebauten Leitungsdurchführungssystem gelöst werden, um beispielsweise eine zusätzliche Leitung aufzunehmen oder eine bestehende Leitung auszutauschen, ohne weitere Leitungsabdichtungen zu öffnen oder sogar einen Großteil der Leitungsdurchführung innerhalb der Durchlassöffnung abbauen oder neu aufbauen zu müssen.

Im Folgenden wird die Erfindung anhand von Ausführungsbeispielen näher erläutert, wobei die dabei offenbarten Merkmale auch in anderen Kombinationen erfindungswesentlich sein können und sich, wie bereits erwähnt, implizit auf alle Kategorien der Erfindung beziehen.

Im Folgenden zeigt:
- Figur 1: eine Draufsicht und eine Seitenansicht eines erfindungsgemäßen Moduls,
- Figur 2: eine Draufsicht und eine Seitenansicht eines erfindungsgemäßen Elasto- merkörperteils mit daran befestigten Pressplatten,
- Figur 3: eine Draufsicht und eine Seitenansicht eines erfindungsgemäßen Lei- tungsdurchführungssystems mit vier Modulen in einem Rahmen und
- Figur 4: eine Draufsicht und eine Seitenansicht auf einen Rahmen mit vier Durch- lassöffnungen für jeweils vier Module.

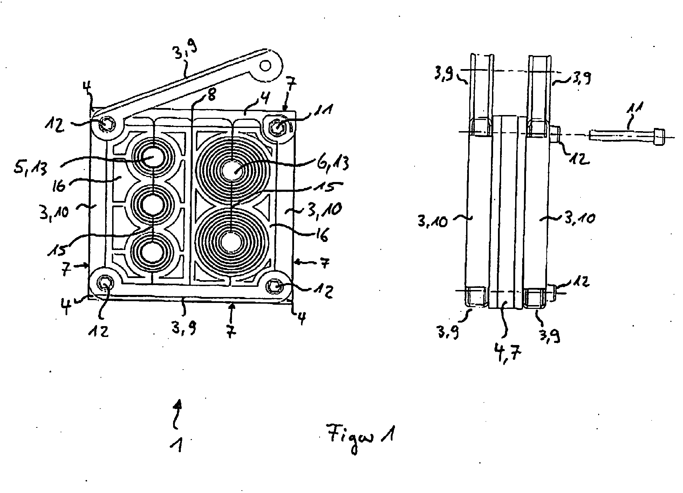

Figur 1 zeigt links eine Draufsicht in Durchführungsrichtung eines quadratischen Moduls 1 eines erfindungsgemäßen Leitungsdurchführungssystems 2 zur Aufnahme von fünf Leitungen mit geöffneter Spannvorrichtung 3. Rechts ist eine Seitenansicht in einer Richtung senkrecht dazu dargestellt.

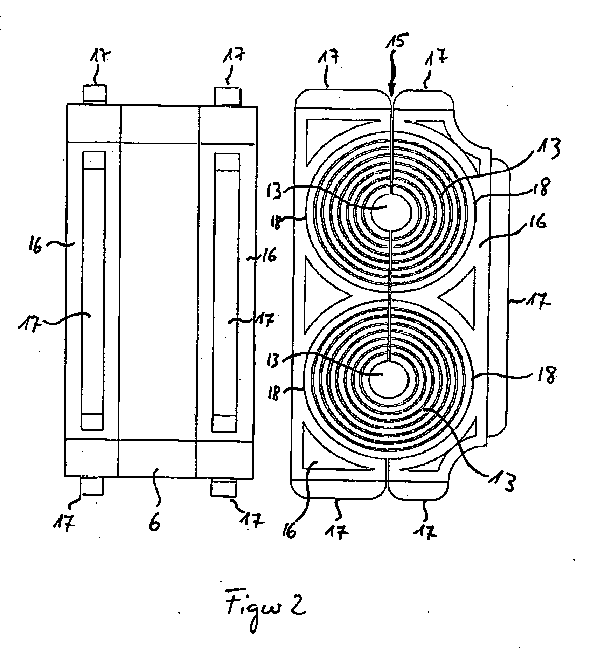

Der Elastomerkörper ist in drei Elastomerkörperteile 4, 5, 6 unterteilt, von denen ein erster Elastomerkörperteil 4, der den zweiten 5 und dritten 6 umschließt, eine auf dem gesamten Umfang des Moduls 1 senkrecht zur Durchführungsrichtung auch in nicht gespanntem Zustand der Spannvorrichtung 3 außen liegende Dichtfläche 7 bildet. Weiterhin ist er, in der Figur 1 oben, mit einem Schlitz 8 zum Öffnen senkrecht zur Durchführungsrichtung versehen. Er ist in Figur 2 zum Vergleich weggelassen.

Der zweite und dritte Elastomerkörperteil 5, 6 sind zur Aufnahme von drei bzw. zwei Leitungen ausgelegt. Die Elastomerkörperteile 5, 6 zur Leitungsaufnahme können beispielsweise zum Öffnen oder Anpassen der für die Leitungsdurchführung vorgesehenen Bereiche, zum Austausch oder zum Einlegen einer Leitung aus dem Modul 1 entnommen werden. Die Elastomerkörperteile 5, 6 zur Leitungsaufnahme werden weiter unten anhand von Figur 2 detaillierter beschrieben.

Die Spannvorrichtung 3 weist auf beiden Seiten in Durchführungsrichtung je zwei, in Figur 1 oben und unten liegende U-Profile 9 aus Stahl und je zwei vertikale Verbindungsstücke 10 an der linken und rechten Seite des Moduls 1 aus glasfaserverstärktem Kunststoff auf mit jeweils an Ihren Enden einer Vorrichtung zur Aufnahme einer Schraube 11, 12 als Spannbolzen.

Das Ausführungsbeispiel besitzt eine Spannvorrichtung 3 mit vier Schrauben 11, 12 als Spannbolzen, von denen z. B. eine 11 der gegenüber dem Schlitz 8 des ersten Elastomerkörperteils 4 nächstliegenden als Verschluss und eine benachbarte 12 als Gelenk zum Öffnen des Moduls 1 und Herausnehmen der Elastomerkörperteile 5, 6 zur Leitungsaufnahme dienen kann. Die Schrauben sind aber grundsätzlich identisch. In der Darstellung ist der Verschluss 11 zum Öffnen der Spannvorrichtung 3 aus dieser hervorgezogen.

Die Seitenansicht rechts in Figur 1 verdeutlicht den Aufbau des Moduls 1 in Durchführungsrichtung, bezüglich der die Spannvorrichtung 3 beidseitig außen liegt. Dazwischen sind die Elastomerkörperteile 4, 5, 6 eingeschlossen, die beim Spannen der Spannvorrichtung 3 in Durchführungsrichtung gestaucht werden, wie sich aus der Beschreibung der Figur 2 für die Elastomerkörperteile 5, 6 noch näher ergibt, und sich folglich senkrecht dazu ausdehnen. Dadurch werden sowohl die Leitungen, Schlitze 8, 15 und Grenzflächen zwischen den Elastomerkörperteilen 4, 5, 6 gedichtet, als auch der Umfang des Moduls 1 senkrecht zur Durchführungsrichtung vergrößert, indem der erste Elastomerkörperteil 4 sich in diese senkrechte Richtungen nach außen hin ausdehnt. Er dichtet dann gegebenenfalls gegen benachbarte Module 1 oder angrenzende Flächen der Durchlassöffnung.

Figur 2 zeigt in der rechten Hälfte eine Draufsicht auf den Elastomerkörperteil 6 zur Aufnahme von zwei Leitungen in Durchführungsrichtung, der aus dem Modul 1 entnommen ist; links ist eine Seitenansicht in einer Richtung senkrecht dazu dargestellt. Der Elastomerkörperteil 5 zur Aufnahme von drei Leitungen ist analog aufgebaut, so dass die folgende Beschreibung auch für diesen und prinzipiell auch für weitere Elastomerkörperteile mit anderen Leitungskonfigurationen gilt.

Der Elastomerkörperteil 6 weist konzentrisch angeordnete zylindrische bzw. hohlzylindrische Füllelemente 13 auf, die zur Aufnahme der Leitungen teilweise oder vollständig, je nach Leitungsdurchmesser, entnommen werden können. Hierzu sind die hohlzylindrischen Füllelemente 13 teils ganz und teils zur Hälfte durch einen Schlitz 15 getrennt, so dass ein innen liegendes Füllelement 13 auch ohne ein weiter außen liegendes entnommen werden kann, indem der Elastomerkörperteil 5, 6 an seinem Schlitz 15 aufgeklappt wird. Der Schlitz 15 des Elastomerkörperteils 5, 6 ist nicht durchgängig, so dass dieser in zwei Hälften aufgeklappt werden kann und dabei zusammengehalten wird. Alternativ können auch einfache zylindrische Blindstopfen (nicht gezeigt) vorgesehen sein.

Auf den Stirnseiten in Durchführungsrichtung sind jeweils zwei Pressplatten 16 aus glasfaserverstärktem Kunststoff befestigt, die den Anpressdruck der Spannvorrichtung 3 auf das Elastomerkörperteil 6 verteilen. Pro Elastomerkörperteil 5, 6 sind auf jeder Seite in Durchlassrichtung jeweils zwei Pressplatten 16 angebracht, so dass dieser trotz der an ihm befestigten Pressplatten 16 weiterhin aufklappbar bleibt. Die Pressplatten 16 des Elastomerkörperteils 6 zur Aufnahme von zwei Leitungen sind blau, die zur Aufnahme von drei Leitungen sind rot gefärbt, sodass die Farbmarkierungen sich hier auf den Maximaldurchmesser einer zum Einlegen geeigneten Leitung beziehen.

An ihren Seiten zur Spannvorrichtung 3 hin weisen die Pressplatten 16 ein Außenprofil 17 auf, welches aus der Durchführungsrichtung betrachtet hinter Teile der Spannvorrichtung 3 greift. Diese Profilpassung der Spannvorrichtung 3 mit den Pressplatten 16 im Bereich des Außenprofils 17 ist in Figur 1 dargestellt. Sie verhindert damit durch Formschluss ein Herausziehen der Pressplatten 16 zusammen mit dem daran befestigten Elastomerkörperteil 5, 6 aus dem Modul 1.

An ihrer Seite zum Schlitz 15 der Elastomerkörperteile 5, 6 hin weisen die Pressplatten 16 jeweils halbkreisförmige Aussparungen 18 auf mit einem Radius, der geringfügig größer als der größte vorgesehene Durchmesser der aufzunehmenden Leitung ist. Dadurch wird sichergestellt, dass die Leitungen durch den Elastomerkörperteil 5, 6 gedichtet werden können.

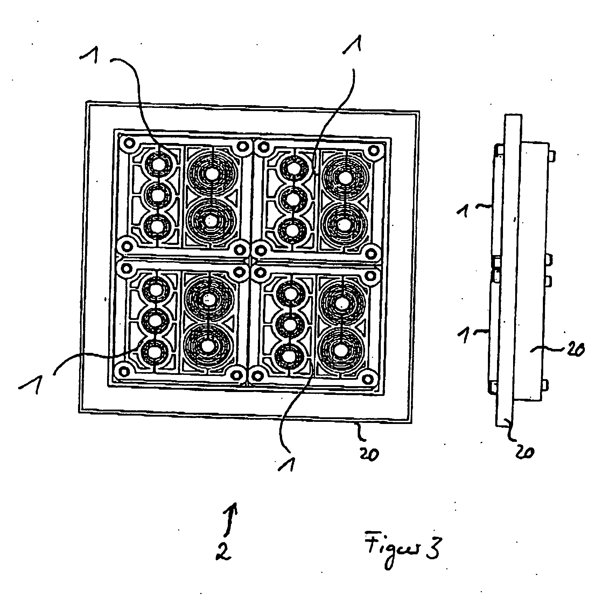

Figur 3 zeigt eine Draufsicht und eine Seitenansicht eines montierten erfindungsgemäßen Systems 2 mit vier baugleichen erfindungsgemäßen Modulen 1 in einem Rahmen 20 aus Metall mit genau einer zusammenhängenden Durchlassöffnung, der zum Anschweißen oder zusammen mit einem Dichtungsband zum Anschrauben in einer Wandöffnung ausgelegt ist.

In diesem bevorzugten Ausführungsbeispiel weisen alle Module 1 eine Spannvorrichtung 3 auf; es könnten im Sinne der Erfindung jedoch auch ein oder zwei der vier Module 1 ohne eigene Spannvorrichtung 3 eingesetzt werden. Weiterhin ist die Auswahl von vier baugleichen Modulen 1 hier frei getroffen, es sind ebenso Konfigurationen mit Modulen 1 zur Aufnahme sowohl unterschiedlicher Leitungsanzahl als auch unterschiedlicher Leitungsquerschnitte vorgesehen.

Im gespannten Zustand aller Module 1 dichtet jedes einzelne an seinen vier Seiten senkrecht zur Durchführungsrichtung mit der außenliegenden Elastomerkörperdichtfläche 7 jeweils unmittelbar an die benachbarten Module und an den Rahmen. Durch Lösen der Spannvorrichtung 3 eines einzelnen Moduls 1 kann dieses aus dem Leitungsdurchführungssystem 2 entnommen werden, ohne dass die verbleibenden Module 1 in ihrer Dichtwirkung bezüglich eventuell aufgenommener Leitungen oder ihrer Dichtung und Befestigung bezüglich dem Rahmen 20 beeinträchtigt werden. Dies ermöglicht auf effiziente Art und Weise einen Austausch oder ein nachträgliches Hinzufügen einer Leitung in einer bestehenden Leitungsdurchführung.

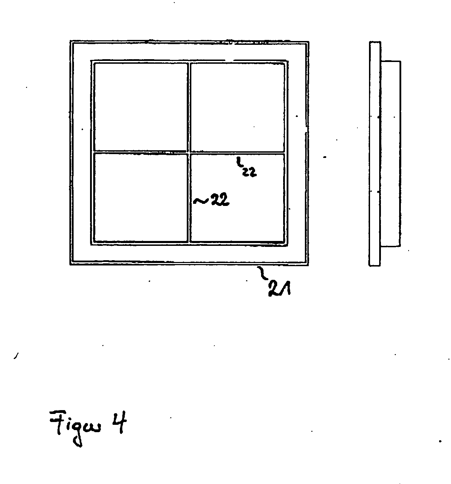

Figur 4 zeigt eine Draufsicht und eine Seitenansicht eines Rahmens 21 der mittels Stege 22 in vier Durchlassöffnungen unterteilt ist. Entsprechend diesem Beispiel sind auch Unterteilungen einer Wandöffnung mittels eines Rahmens in eine andere Mehrzahl von Durchlassöffnungen zur Aufnahme je eines Leitungsdurchführungssystems 2 bevorzugt.

Erfindungsgemäß nimmt jede der vier Durchlassöffnungen eine Mehrzahl Module 1 auf; in diesem Beispiel sind, entsprechend Figur 3, jeweils vier Module 1 pro Durchlassöffnung vorgesehen, sodass der Rahmen 21 insgesamt für die Aufnahme von 16 Modulen 1 ausgelegt ist.

## Patentansprüche

1. Leitungsdurchführungssystem (2) zum Aufbauen eines dichtenden Verschlusses einer Öffnung in einer Wand mit
einem Rahmen (20) zur dichten Befestigung in der Wandöffnung und mit einer zusammenhängenden Durchlassöffnung für eine Leitung in dem Rahmen (20),
einer Spannvorrichtung (3) und
einer Mehrzahl Module (1), die jeweils aufweisen:
eine solche Querschnittsfläche senkrecht zur Durchführungsrichtung im Verhältnis zu der Querschnittsfläche der Durchlassöffnung des Rahmens (20), dass sie gemeinsam zum Dichten in die Durchlassöffnung eingesetzt werden können,
einen Elastomerkörper (4, 5, 6) zum Aufnehmen der Leitung und
eine Elastomerkörperdichtfläche (7), die in gespanntem Zustand der Spannvorrichtung (3) auf dem Umfang des Moduls (1) senkrecht zur Durchführungsrichtung außen liegt,
**dadurch gekennzeichnet, dass**
die Module (1) jeweils eine Spannvorrichtung (3) zum individuellen Spannen in Durchführungsrichtung aufweisen.

2. System (2) nach Anspruch 1, bei dem
die Spannvorrichtung (3) einen Verschluss (11) zum Öffnen für das Einlegen oder Entnehmen der Leitung und Wiederverschließen aufweist und
die Spannvorrichtung (3) in geschlossenem Zustand den Elastomerkörper (4, 5, 6) des Moduls (1) senkrecht zur Durchführungsrichtung umschließt.

3. System (2) nach Anspruch 2, bei dem der Verschluss (11) einen Spannbolzen zum Spannen der Spannvorrichtung (3) aufweist und das ein Gelenk (12) zum Öffnen der Spannvorrichtung (3) aufweist, das einen weiteren Spannbolzen zum Spannen der Spannvorrichtung (3) als Gelenkachse aufweist.

4. System (2) nach einem der vorstehenden Ansprüche, bei dem der Elastomerkörper (4, 5, 6) mehrteilig ist.

5. System (2) nach einem der vorstehenden Ansprüche, bei dem der Elastomerkörper oder ein Elastomerkörperteil (4, 5, 6) in Durchführungsrichtung so eingeschlitzt ist, dass er zum Einlegen oder Entnehmen der Leitung geöffnet werden kann und dabei zusammenhängend bleibt.

6. System (2) nach einem der vorstehenden Ansprüche, bei dem der Elastomerkörper oder ein Elastomerkörperteil (4, 5, 6) ein oder eine Mehrzahl konzentrisch angeordnete, axial in Durchführungsrichtung angeordnete zylindrische Füllelemente (13) aufweist, die einzeln lösbar sind, um eine Öffnung für eine Leitung freizugeben oder zu vergrößern.

7. System (2) nach einem der vorstehenden Ansprüche, bei dem der Elastomerkörper oder ein Elastomerkörperteil (4, 5, 6) eine Öffnung in Durchführungsrichtung für die Leitung aufweist.

8. System (2) nach einem der vorstehenden Ansprüche, bei dem zumindest eines der Module (1) eine in Durchführungsrichtung sichtbare Farbmarkierung aufweist, die eine Information über seine Eigenschaften wiedergibt.

9. System (2) nach einem der vorstehenden Ansprüche, bei dem die Module (1) beidseitig in Durchführungsrichtung jeweils mindestens eine Pressplatte (16) zur Verteilung der Anpresskraft ihrer Spannvorrichtung (3) auf den Elastomerkörper oder einen Elastomerkörperteil (4, 5, 6) aufweisen und die Pressplatten (16) fest mit dem Elastomerkörper oder Elastomerkörperteil (4, 5, 6) verbunden sind.

10. Verfahren zum Aufbauen eines dichtenden Verschlusses einer zusammenhängenden Öffnung für eine Leitung in einer Wand, bei dem eine Mehrzahl Module (1)
jeweils die Leitung in einem Elastomerkörper (4, 5, 6) aufnehmen können,
gemeinsam in die Wandöffnung eingesetzt werden,
mit einer Spannvorrichtung (3) gespannt werden,
dann die Leitung dichten und
ferner mit einer Elastomerkörperdichtfläche (7) dichten, die in gespanntem Zustand der Spannvorrichtung (3) auf dem Umfang des Moduls (1) senkrecht zur Durchführungsrichtung außen liegt,
**dadurch gekennzeichnet, dass**
jedes Modul (1) mit einer eigenen Spannvorrichtung (3) individuell gespannt wird.

11. Verfahren nach Anspruch 10, bei dem
das zumindest eine Modul (1), das die Leitung aufnimmt, mit einem Verschluss (11) der Spannvorrichtung (3) geöffnet wird, um außerhalb der Wandöffnung die Leitung in den Elastomerkörper (4, 5, 6) einzulegen und
das Modul (1) wieder verschlossen wird, um es an der Leitung zu fixieren und dann das Modul (1) in die Wandöffnung eingesetzt wird.

12. Verwendung eines Leitungsdurchführungssystems (2) mit
einer Spannvorrichtung (3) zum Spannen in Durchführungsrichtung und
einer Mehrzahl Module (1), die jeweils aufweisen:
einen Elastomerkörper (4, 5, 6) zum Aufnehmen der Leitung und
eine Elastomerkörperdichtfläche (7), die in gespanntem Zustand der Spannvorrichtung (3) auf dem Umfang des Moduls (1) senkrecht zur Durchführungsrichtung außen liegt,
für ein Verfahren nach Anspruch 10 oder 11.

13. Verwendung nach Anspruch 12 eines Systems (2) nach einem der Ansprüche 1 - 9 für einen dichtenden Verschluss einer Durchlassöffnung in einer Wand, bei der die Wand ausgewählt ist aus einer Menge umfassend Wände von Luft-, Wasser- und Landfahrzeugen, einer Maschine und einer technischen Anlage.

## Claims

1. A conduit duct system (2) for setting up a sealing of an opening in a wall having a frame (20) for a sealed mounting in the wall opening and having a continuous through-hole for a conduit in said frame (20),
a tensioning device (3) and a
plurality of modules (1), each comprising:
such a cross-sectional area perpendicular to a duct direction in relation to a cross-sectional area of said through-hole of said frame (20) that they can be inserted together into said through-hole for sealing,
an elastomer body (4, 5, 6) for receiving said conduit and
an elastomer body sealing surface (7) lying, when said tensioning device (3) is tensioned, outside on the circumference of said module (1) perpendicular to said duct direction,
**characterized in that**,
said modules (1) each comprise a tensioning device (3) for individually tensioning in said duct direction.

2. The system (2) according to claim 1, wherein
said tensioning device (3) comprises a closure (11) for opening in order to insert or take out said conduit and for closing again and said tensioning device (3) encloses, when being closed, said elastomer body (4, 5, 6) of said module (1) perpendicular to said duct direction.

3. The system (2) according to claim 2, wherein said closure (11) comprises a tensioning bolt for tensioning said tensioning device (3) and said system (2) comprises an articulation (12) for opening said tensioning device (3), which articulation comprises another tensioning bolt for tensioning said tensioning device (3) as articulated axle.

4. The system (2) according to one of the preceding claims, wherein said elastomer body (4, 5, 6) is multi-part.

5. The system (2) according to one of the preceding claims, wherein said elastomer body or an elastomer body part (4, 5, 6) is slit in said duct direction in such a way that in can be opened for inserting or taking out said conduit, and remains connected therein.

6. The system (2) according to one of the preceding claims, wherein said elastomer body or an elastomer body part (4, 5, 6) comprises one or a plurality of concentrically arranged cylindrical filling elements (13) axially arranged in said duct direction, which are separable individually for opening or enlarging an opening for a conduit.

7. The system (2) according to one of the preceding claims, wherein said elastomer body or an elastomer body part (4, 5, 6) comprises an opening for said conduit in said duct direction.

8. The system (2) according to one of the preceding claims, wherein at least one of said modules (1) has a colour marking being visible in said duct direction, which represents information on its properties.

9. The system (2) according to one of the preceding claims, wherein said modules (1) comprise on both sides in said duct direction at least one squeezing plate (16), respectively, for distributing the pressing force of its tensioning device (3) to said elastomer body or an elastomer body part (4, 5, 6) and wherein said squeezing plates (16) are firmly attached to said elastomer body or said elastomer body part (4, 5, 6).

10. A method for setting up a sealing of a continuous opening for a conduit in a wall, wherein
a plurality of modules (1)
can each receive said conduit in an elastomer body (4, 5, 6),
are inserted together into said wall opening,
are tensioned by a tensioning device (3),
then seal said conduit and
further seal by an elastomer body sealing surface (7) lying, when said tensioning device (3) is tensioned, outside on the circumference of said module (1) perpendicular to said duct direction,
**characterized in that**
each module (1) can be tensioned individually with its own tensioning device (3).

11. The method according to claim 10, wherein
said at least one module (1), which receives said conduit, is opened with a closure (11) of said tensioning device (3) for inserting said conduit outside said wall opening into said elastomer body (4, 5, 6) and
said module (1) is closed again for fixing it to said conduit and said module (1) is then inserted into said wall opening.

12. A use of a conduit duct system (2) having
a tensioning device (3) for tensioning in duct direction and
a plurality of modules (1), each comprising:
an elastomer body (4, 5, 6) for receiving said conduit and
an elastomer body sealing surface (7) lying, when said tensioning device (3) is tensioned, outside on the circumference of said module (1) perpendicular to said duct direction,
for a method according to claim 10 or 11.

13. The use according to claim 12 of a system (2) according to one of claims 1-9 9 for a sealing of a through-hole in a wall, wherein said wall is chosen from a set comprising walls of aircrafts, watercrafts and land crafts, of a machine and a technical plant.

## Revendications

1. Système de passages de conduites (2) pour la construction d'un dispositif de fermeture étanche d'une ouverture murale, avec
un cadre (20) pour la fixation étanche dans une ouverture murale, et avec une ouverture de passage en continu pour une conduite dans un cadre (20),
un dispositif de serrage (3)
une pluralité de modules (1), dont chacun comporte :
une telle aire de la section verticale au sens de passage par rapport à l'aire de la section
de l'ouverture de passage du cadre (20), qu'elles peuvent être insérées conjointement dans l'ouverture de passage pour l'étanchéité,
un corps élastomère (4, 5, 6) pour l'admission de la conduite, et
une surface d'étanchéité de corps élastomère (7), qui à l'état serré du dispositif de serrage s'applique extérieurement sur le pourtour du module (1), verticalement au sens de passage,
**caractérisé en ce que**
les modules (1) comportent chacun un dispositif de serrage (3) pour le serrage individuel au sens de passage.

2. Système (2) selon la revendication 1, dans lequel
le dispositif de serrage (3) comporte un dispositif de fermeture (11) pour l'ouverture en vue de l'insertion ou du retrait et pour la refermeture, et
le dispositif de serrage (3) enserre à l'état fermé de corps élastomère (4, 5, 6) du module (1), verticalement au sens de passage.

3. Système (2) selon la revendication 2, dans lequel le dispositif de fermeture (11) comporte un boulon de serrage pour le serrage du dispositif de serrage (3), et comportant une articulation (12) pour l'ouverture du dispositif de serrage (3), qui comporte un autre boulon de serrage pour le serrage du dispositif de serrage (3) en tant qu'axe d'articulation.

4. Système (2) selon l'une des revendications précédentes, dans lequel le corps élastomère (4, 5, 6) est constitué de plusieurs parties.

5. Système (2) selon l'une des revendications précédentes, dans lequel le corps élastomère ou une partie de corps élastomère (4, 5, 6) est fendu(e) de telle manière au sens de passage, qu'il/elle peut être ouvert(e) pour l'insertion ou le retrait de la conduite, tout en restant solidaire.

6. Système (2) selon l'une des revendications précédentes, dans lequel le corps élastomère ou une partie de corps élastomère (4, 5, 6) comporte un ou plusieurs éléments de garnissage (13) cylindriques, disposés concentriquement et axialement au sens de passage, qui peuvent être détachés individuellement, pour dégager ou agrandir une ouverture destinée à la conduite.

7. Système selon l'une ou plusieurs des revendications précédentes, dans lequel le corps élastomère ou une partie de corps élastomère (4, 5, 6) comporte une ouverture au sens de passage, pour la conduite.

8. Système (2) selon l'une des revendications précédentes, dans lequel au moins l'un des modules (1) comporte une marque de couleur visible au sens de passage, qui fournit des informations sur ses caractéristiques.

9. Système (2) selon l'une des revendications précédentes, dans lequel les modules comportent chacun au moins une plaque de pressage (16), des deux côtés au sens de passage, pour la répartition de la force de pressage du dispositif de serrage (3) sur le corps élastomère ou une partie de corps élastomère (4, 5, 6), les plaques de pressage (16) étant reliées solidement avec le corps élastomère ou une partie de corps élastomère (5, 6).

10. Procédé pour la construction d'un dispositif de fermeture étanche d'une ouverture en continu pour une conduite dans un mur, dans lequel
une pluralité de modules (1)
peuvent chacun recevoir la conduite dans un corps élastomère (5, 6), sont insérés conjointement dans l'ouverture murale,
sont serrés avec un dispositif de serrage (3),
rendent ensuite la conduite étanche, et
sont en outre étanches avec une surface d'étanchéité de corps élastomère (7), qui à l'état serré du dispositif de serrage (3) s'applique extérieurement sur le pourtour du module (1), verticalement au sens de passage,
**caractérisé en ce que**
chaque module (1) est serré individuellement avec un dispositif de serrage (3) séparé.

11. Procédé selon la revendication 10, dans lequel
l'au moins un module (1) recevant la conduite est ouvert à l'aide d'un dispositif de fermeture (11) du dispositif de serrage (3), pour insérer la conduite dans le corps élastomère (5, 6) à l'extérieur de l'ouverture murale, et
le module (1) est refermé, pour la fixation avec la conduite, puis le module (1) est inséré dans l'ouverture murale.

12. Utilisation d'un système de passages de conduites (2), avec
un dispositif de serrage (3) pour le serrage au sens de passage, et
une pluralité de modules (1), comportant chacun:
un corps élastomère (5, 6) pour l'admission de la conduite, et
une surface d'étanchéité de corps élastomère (7), qui à l'état serré du dispositif de serrage (3) s'applique extérieurement sur le pourtour du module (1), verticalement au sens de passage,
pour un procédé selon l'une des revendications 10 ou 11.

13. Utilisation selon la revendication 12 d'un système (2) selon l'une des revendications 1 à 9, pour un dispositif de fermeture d'une ouverture de passage dans un mur, dans laquelle le mur est sélectionné parmi une quantité comprenant des parois d'avions, de navires et de véhicules terrestres, d'une machine ou d'une installation technique.
